# EUROPEAN PATENT SPECIFICATION

(11) **EP 0 411 236 B1**
(45) Date of publication and mention of the grant of the patent: **03.01.1996**
(21) Application number: 90102203.8
(22) Date of filing: 05.02.1990
(51) Int. Cl.: C08L 75/04, D06N 3/14

(54) **Polyurethane-based composition endowed with capability of absorbing moisture, particularly suitable for manufacturing synthetic leather and the like, and process for producing it**
Feuchtigkeitsabsorbierende Zusammensetzung auf Polyurethanbasis, besonders geeignet zur Herstellung von Kunstleder und ähnlichem sowie Verfahren zu ihrer Herstellung
Composition à base de polyuréthane absorbant l'humidité, adaptée en particulier à la fabrication de cuir synthéthique et de produits analogues, ainsi que son procédé de préparation

(30) Priority: 01.08.1989 IT 2141089
(43) Date of publication of application: 06.02.1991
(73) Proprietor: GIOVANNI CRESPI S.P.A., I-20025 Legnano MI (IT)
(72) Inventor: Albanesi, Giancarlo, I-20134 Milano MI (IT); Chierichetti, Luigi, I-20025 Legnano MI (IT)
(74) Representative: Trupiano, Roberto

(56) References cited:
- US-A- 3 467 604
- US-A- 3 660 218
- US-A- 4 707 400

## Description

The present invention relates to a polyurethane composition endowed with the property of being capable of reversibly absorbing moisture, which composition is particularly suitable for use as the base component for manufacturing synthetic materials substitutive for leather and skin of natural origin, and to the process for preparing it.

It is well known that a large number of types of synthetic skins and leathers are constituted by a polymeric material of polyurethane type, which impregnates, or is spread on, a flexible support, such as felt, fabric, and non-woven fabric. By suitably selecting and adjusting also according to techniques known from the prior art the formulation and the composition of the polyurethane polymer, materials can be obtained which display characteristics of mechanical strength, of consistency, of flexibility, of elastic modulus, and so forth, which are very close to those of skin and leather of natural origin and which, in some uses, can be advantageously employed in lieu of these latter.

However, it is known as well that skin and leather of natural origin are characterized by their capability of reversibly absorbing moisture, thanks to their particular physical and physical-chemical characteristics. Such a capability of absorbing moisture causes that particular feeling of physiological comfort, which is a typical feature of the products of natural origin, when these latter come into contact with the normal perspiration of human body, as it occurs, e.g., in case of footwear, of gloves, of coats, jackets and the like, as well as in case of upholsteries of armchairs, settees, and so forth.

On the contrary, this comfortable feeling is at all absent from the presently available substitutive synthetic products, because these synthetic products do not practically have any capability of absorbing the moisture deriving from the normal perspiration of human body, when said synthetic products are into contact with this latter.

In fact, whilst the absorption of moisture by the skin or leather of natural origin at 25°C and with a relative air humidity of 10̸0̸% is of about from 18 to 31%, the absorption of moisture by a synthetic leather on polyurethane basis, under the same operating conditions, is of about 3%. Such a poor capability of absorbing water can be essentially ascribed to the polymeric material which impregnates, and/or was spread onto, the flexible support, and binds said flexible support, and which in most cases is precisely constituted by polymeric materials of polyurethane type.

The most widely used polymeric binders are essentially linear polyurethanes with a high molecular weight, which are usually applied onto the support as solutions in dimethylformamide, with a subsequent microcoagulation, obtained by removing the dimethylformamide solvent with water in suitable coagulation baths, according to techniques known from the prior art.

These customarily used linear polyurethanes do not practically have any capability of absorbing moisture, even if the microcoagulated films show an appreciable permeability to water vapour.

Improvements in this field were reached as described in US 3.467.604 (A.S.MICHAELS) which relates to hydrophobic organic polymer compositions having moisture vapor permeability and comprising a hydrophobic organic polymer having dispersed therein finely divided particles of a ionically cross-linked polyelectrolyte formed of two ionically associated synthetic organic linear polymers, one having dissociable anionic groups and the other having dissociable cationic groups, attacched to a polymeric chain.

US 3.660.218 (T.H.SHEPHERD et al.) relates to a vapor permeable leather substitute which has good moisture vapor transmission properties. This object can be attained by preparing a sheet or film of a binder polymer having dispersed therethrough finely divided particles of a hydrophilic acrylate or methacrylate polymer.

Said finely divided particles can be prepared directly during the polymerization or they can be formed by grinding or otherwise breaking up larger particles of the polymer.

The acrylate or methacrylate polymer, which is characterized by the fact that the carboxylic group is functionalized as an ester derivative, is a polymer of a member of the group consisting of hydroxyethyl acrylate, hydroxyethyl methacrylate, hydroxypropyl acrylate and hydroxypropyl methacrylate.

US 4,707,400 (D.R.TOWERY) relates to a process of making a waterproof, water vapor permeable coated fabric having a microporous polyurethane layer thereon, and comprising applying a solution of a polyurethane elastomer to a base fabric; the solution of polyurethane elastomer contains a thickener system based on acrylic acid polymers, which is used to control and adjust coating solution viscosity. Preferred thickener systems are the Carbopol resins which are soluble in both water and water-miscible polar organic solvent. Carbopol resins are water-soluble acrylic acid polymers crosslinked with a polyalkenyl polyether and can be neutralized with an amine to acheive maximum viscosity. A purpose of the present invention is of providing a polymeric polyurethane-based composition suitable for being used as a base constituent of the synthetic materials substitutive for skin and leather of natural origin, in all of those uses in which natural skin and leather are advantageously used, which composition is endowed with the capability of reversibly absorbing moisture, and hence of causing in the synthetic skin and/or leather manufactured by using said composition, that particular comfortable feeling, when said synthetic skin and/or leather comes into contact with human body, which is typical for skin and leather of natural origin.

These and still further purposes and the relevant advantages which are better set forth by the following disclosure are advantageously achieved by a polymeric polyurethane-based composition suitable for being used as the base constituent of the synthetic materials substitutive for skin and leather of natural origin, of the type constituted by a polymeric composition which impregnates, binds, and/or is spread on, a suitable support, such as fabric, felt, non-woven fabric, their combinations and the like, which composition, according to the present invention, comprises:
A. a microcoagulated polyurethane polymer;
B. at least one hydrophile additive insoluble in water, selected from the group comprising partially crosslinked polyacrylic acid, partially crossliked polyacrylic acid either partially or totally salified with metal cations, crosslinked polyvinyl alcohol, cellulose, and/or their mixtures,
   homogeneously blended in said microcoagulated polyurethane polymer.

In fact, the present Applicant was able to observe that when said B) additive, hydrophile but insoluble in water, is blended in a microcoagulated polyurethane polymer A) of the type as normally used for the production of materials substitutive for skin and leather of natural origin, the so obtained material is endowed with the capability of absorbing moisture from the surrounding damp environment, and of subsequently releasing said moisture in a dry environment, as it practically occurs when the material is used for garments, footwear, upholsteries for armchairs and the like, with this feature being retained for an indefinitely long time, thanks to the fact that the B) additive according to the instant invention, although is hydrophile, is insoluble in water and therefore is not washed away by this latter as time goes on and under conditions of repeated and continuous use of the materials, under conditions of alternating exposures to a dry environment and to damp environments.

Still according to the present invention, said polyurethane-based composition comprises
- from 80̸ to 99,5% by weight of said A) microcoagulated polyurethane polymer, and
- from 0̸.5 to 20̸% by weight of said B) hydrophile additive.

Said polyurethane polymer normally is a linear, non-crosslinked polymer, soluble in known solvents, such as, e.g., dimethylformamide.

Non-crosslinked polyurethanes can be advantageously used, which derive from the reaction of hydroxy-capped polyesters and/or polyethers with aromatic and/or aliphatic diisocyanates.

The polyurethane-based composition endowed with the capability of reversibly absorbing moisture according to the instant invention can be advantageously obtained by means of a process which comprises the following steps:
a. preparation of a solution of a non-crosslinked polyurethane polymer in a suitable solvent of known type, such as, e.g., dimethylformamide;
b. mixing of said polyurethane solution with said hydrophile additive as a colloidal dispersion;
c. spreading of, and/or impregnation with, said so obtained mixture, onto/of a suitable support such as fabric, felt, non-woven fabric and/or combinations thereof;
d. microcoagulation of the so obtained composition by means of the removal of said solvent with water, according to techniques and modalities known from the prior art.

The polyurethane-based composition according to the present invention can also comprise other known additives, such as fillers, pigments, stabilizers, antioxidants, and so forth, which are blended in said polyurethane-based composition by being added, e.g., to the b) mixture constituted by said solution of polyurethane with said additive as a colloidal dispersion, and/or to said a) solution of said polyurethane in a suitable solvent and/or to said colloidal dispersion of said hydrophile additive.

The microcoagulated compositions which are obtained according to the instant invention show two peculiar characteristics, i.e., a moisture absorption which is proportional to the amount of hydrophile component contained in them, and the modification of the surface "hand", which loses its characteristics of "cold" type typical for the elastomers, in favour of the characteristics of "warm hand" of skins and leathers, while retaining all of the characteristics of elastic modulus of polyurethanes, essential in the manufacture of substitutive synthetic materials.

The presence of free carboxy groups in the composite material according to the present invention, enables the manufactured articles produced from it to undergo a full range of post-finishing treatments, such as, e.g., the salification with suitable metal cations, the dyeing with basic dyes and, in general, the possibility of using the techniques known in the tanning industry for the finishing of the synthetic materials prepared according to the instant finding.

In particular, it was observed that the salification with aluminum metal cation causes an increase in the absorption power for moisture, which increase takes place to a particularly considerable extent at low concentrations of polyacrylic acid.

The invention according to the instant finding is better set forth and disclosed by the following examples of practical embodiment thereof, which are supplied for merely illustrative purposes, and are not limitative of the scope of protection of the same finding.

### Example 1

A colloidal dispersion at 10̸% of crosslinked polyacrylic acid (CPA) is prepared in a stirred dissolver under fast stirring conditions, by using the product marketed under the trade name GELACRIL 70̸2 by Chimica Pomponesco of Pomponesco (province of Mantua, Italy), and by operating at room temperature. The obtained dispersion is perfectly stable over time.

With such a dispersion, and using a solution of polyurethane at 35% in dimethylformamide, wherein the polyurethane is the product from the reaction of a hydroxy-capped polyester with methane-diphenyl-diisocyanate, and with the necessary dilution with dimethylformamide, the following compositions are prepared:
(A) mixture at 20̸% of polyurethane and 1% of CPA;
(B) mixture at 20̸% of polyurethane and 2% of CPA;
(C) mixture at 20̸% of polyurethane and 3% of CPA;
(D) mixture at 20̸% of polyurethane and 4% of CPA, wherein the percentages are percentages by weight.

Such compositions are used in order to prepare films by spreading on glass supports and subsequent microcoagulation by removal of the solvent with water, by means of a dipping procedure.

After the complete removal of the solvent, the films are vacuum dried at 60̸°C, up to constant weight.

The so prepared microcoagulated samples are exposed at 25°C to an atmosphere containing a relative humidity of 10̸0̸%, up to constant weight. The moisture absorption is determined as a percentage relatively to the dry weight, and the following results are obtained:

| Sample | CPA % | Moisture absorption % |
|---|---|---|
| A | 5 | 5.4 |
| B | 10̸ | 7.8 |
| C | 15 | 8.9 |
| D | 20̸ | 12.5 |

### Example 2

The microcoagulated samples prepared according to Example 1, vacuum-dried at 60̸° C up to constant weight, are dipped into a solution at 2% of aluminum sulfate at room temperature, then are washed with deionized water and are dried once more at 60̸ °C under vacuum, up to constant weight.

Such samples are exposed at 25°C to an atmosphere with a relative humidity of 10̸0̸%, up to constant weight. Also for these samples salified with aluminum metal cation, the absorption of moisture, as referred to the dry weight of the same samples, is measured, and the following results are obtained:

| Sample | CPA % | Moisture absorption % |
|---|---|---|
| A′ | 5 | 14.3 |
| B′ | 10̸ | 16.9 |
| C′ | 15 | 19.3 |
| D′ | 20̸ | 21.2 |

The increase in moisture absorption power caused by the salification with aluminum in the A' sample, containing 5% of CPA, has to be noticed in particular.

### Example 3

On the microcoagulated samples prepared according to Example 2, with aluminum salification, the release of moisture is determined, which is obtained when they are exposed, at 25°C, to an atmosphere containing a relative humidity of 60̸%.

The results obtained are reported in the following Table.

| Sample | CPA % | Moisture % contained at reported time point (hours) following exposure to relative humidity of 60̸% | | | |
|---|---|---|---|---|---|
| | | 0̸ h | 0̸.5 h | 1.0̸ h | 1.5 h |
| A′ | 5 | 14.3 | 5.4 | 3.9 | 2.5 |
| B′ | 10̸ | 16.9 | 9.0̸ | 5.1 | 4.5 |
| C′ | 15 | 19.3 | 10̸.8 | 6.2 | 5.7 |
| D′ | 20̸ | 21.2 | 12.0̸ | 7.1 | 6.5 |

After 1.5 hours, the change in moisture content of the various samples becomes negligible, thus indicating a fast reversibility of the process of moisture absorption/moisture release and the reaching of an equilibrium conditions.

### Example 4

A 20̸% polyurethane solution in dimethylformamide is prepared, and an amount of 29% as referred to dry polyurethane weight, of cellulose powder with an average particle size of 50̸ microns is dispersed in it. With such a mixture, a film of 0̸.6 mm of average thickness is prepared by means of the well-known technique of spreading and microcoagulation with water. On such a film, water absorption was determined according to standard methods.

The amount of absorbed water increases up to 6.4% within an 80̸-minutes time, with an absorption kinetic which supplies a value of moisture absorption of 3.4% during the first 30̸ minutes.

### Example 5

The above experience is repeated on a similar mixture, additionally containing also 8.3% of polyacrylic acid. The film produced from such a mixture shows a water absorption of 6.4% during 30̸ minutes, with a much faster absorption kinetic. Such a value of water absorption remains unaltered after 80̸ minutes.

Obviously, to the invention, as hereinabove disclosed and exemplified, technically equivalent variants may be supplied, all of which fall within the scope of protection of the same invention.

## Claims

1. Polymeric, polyurethane-based composition suitable for being used as the base constituent of the synthetic materials substitutive of skin and leather of natural origin, of the type constituted by a polymeric composition which impregnates, binds, and or is spread on, a suitable support, such as fabric, felt, non-woven fabric, and their combinations, characterized in that it comprises:
A. from 80 to 99,5% by weight of a microcoagulated polyurethane polymer;
B. from 0,5 to 20% by weight of at least one hydrophile additive insoluble in water, selected from the group comprising partially crosslinked polyacrylic acid, partially crossliked polyacrylic acid either partially or totally salified with metal cations, crosslinked polyvinyl alcohol, cellulose, and/or their mixtures, homogeneously blended in said microcoagulated polyurethane polymer.

2. Polyurethane-based composition according to claim 1, characterized in that said polyurethane polymer is a linear polyurethane polymer soluble in solvents of known type.

3. Polyurethane-based composition according to claim 1, characterized in that it comprises further known additives, such as fillers and/or pigments and/or stabilizers and/or antioxidants.

4. Polyurethane-based composition according to claim 1, characterized in that said metal cations which either partially or totally salify said partially crosslinked polyacrylic acid are constituted by aluminum.

5. Process for preparing a polyurethane-based composition suitable for being used as the base constituent of materials substitutive for skin and leather of natural origin according to claim 1, characterized in that it comprises the following steps:
a. preparation of a solution of a non-crosslinked polyurethane polymer in a suitable solvent of known type, such as, e.g., dimethylformamide;
b. mixing of said polyurethane solution with said hydrophile additive as a colloidal dispersion;
c. spreading of, and/or impregnation with, said so obtained mixture, onto/of a suitable support such as fabric, felt, non-woven fabric and/or combinations thereof;
d. microcoagulation of the so obtained composition by means of the removal of said solvent with water, according to techniques and modalities known from the prior art.

6. Process according to claim 5, characterized in that fillers and/or pigments and/or stabilizers and/or antioxidants of known type are blended in said polyurethane-based composition by being added to the mixture constituted by said solution of polyurethane with said additive as a colloidal dispersion, and/or to said solution of said polyurethane in a suitable solvent and/or to said dispersion of said hydrophile additive.

7. Synthetic material substitutive for skin and leather of natural origin, constituted by the polyurethane-based polymeric composition according to claim 1, supported on a flexible support, such as a fabric, a felt, a non-woven fabric, and combinations thereof.

## Patentansprüche

1. Polymere Zusammensetzung auf Polyurethanbasis zur Verwendung als Grundbestandteil von synthetischen Materialien als Ersatzprodukt für Häute und Leder natürlichen Ursprungs, wobei es sich um eine polymere Zusammensetzung handelt, mit der ein geeigneter Träger, wie Gewebe, Filz, Faservlies und Kombinationen davon, imprägniert, gebunden oder bestrichen wird, gekennzeichet durch einen Gehalt an folgenden Bestandteilen:
A. 80 bis 99,5 Gew.-% eines mikrokoagulierten Polyurethan-Polymeren;
B. 0,5 bis 20 Gew.-% mindestens eines in Wasser unlöslichen, hydrophilen Additivs aus der Gruppe partiell Vernetzte Polyacrylsäure, entweder partiell oder vollständig mit Metallkationen in ein Salz übergeführte, partiell vernetzte Polyacrylsäure, vernetzter Polyvinylalkohol, Cellulose und/oder Gemische davon in homogener Mischung mit dem mikrokoagulierten Polyurethan-Polymeren.

2. Zusammensetzung auf Polyurethanbasis nach Anspruch 1, dadurch gekennzeichnet, daß es sich beim Polyurethan-Polymeren um ein lineares Polyurethan-Polymeres handelt, das in Lösungsmitteln von bekanntem Typ löslich ist.

3. Zusammensetzung auf Polyurethanbasis nach Anspruch 1, dadurch gekennzeichnet, daß sie ferner bekannte Additive, wie Füllstoffe und/oder Pigmente und/oder Stabilisatoren und/oder Antioxidationsmittel enthält.

4. Zusammensetzung auf Polyurethanbasis nach Anspruch 1, dadurch gekennzeichnet, daß die Metallkationen, die zur partiellen oder vollständigen Salzbildung der partiell vernetzten Polyacrylsäure dienen, von Aluminium bereitgestellt werden.

5. Verfahren zur Herstellung einer Zusammensetzung auf Polyurethanbasis zur Verwendung als Grundbestandteil von Materialien als Ersatz für Häute und Leder natürlichen Ursprungs gemäß Anspruch 1, gekennzeichnet durch folgende Stufen:
a. Herstellen einer Lösung eines nicht-vernetzten Polyurethan-Polymeren in einem geeigneten Lösungsmittel von bekanntem Typ, wie Dimethylformamid;
b. Vermischen der Polyurethanlösung mit dem hydrophilen Additiv als kolloidale Dispersion;
c. Bestreichen und/oder Imprägnieren eines geeigneten Trägers, wie Gewebe, Filz, Faservlies und/oder Kombinationen davon, mit dem erhaltenen Gemisch;
d. Mikrokoagulieren der erhaltenen Zusammensetzung durch Entfernen des Lösungsmittels mit Wasser gemäß herkömmlichen Techniken und Verfahrensweisen.

6. Verfahren nach Anspruch 5, dadurch gekennzeichnet, daß Füllstoffe und/oder Pigmente und/oder Stabilisatoren und/oder Antioxidantien bekannten Type in die zusammensetzung auf Polyurethanbasis eingemischt werden, indem man sie zu dem Gemisch aus der Polyurethanlösung mit dem Additiv in Form einer kolloidalen Dispersion und/oder zu der Lösung aus dem Polyurethan in einem geeigneten Lösungsmittel und/oder zu der Dispersion des hydrophilen Additivs gibt.

7. Synthetisches Material als Ersatz für Häute und Leder natürlichen Ursprungs, gebildet aus der polymeren Zusammensetzung auf Polyurethanbasis nach Anspruch 1, die auf einen flexiblen Träger, wie Gewebe, Filz, Faservlies und Kombinationen davon, aufgebracht ist.

## Revendications

1. Composition polymère à base de polyuréthane susceptible d'être utilisée comme constituant de base des matériau synthétiques pouvant remplacer la peau et le cuir d'origine naturelle, du type constitué par une composition polymère qui imprègne, lie et/ou est enduite sur un support approprié tel que un tissu, un feutre, un tissu non tissé, leur combinaisons caractérisée en ce qu'elle comprend:
A. 80 à 99.5% en poids d'un polymère polyuréthane microcoagulé
B. 0.5 à 20% en poids d'eau moins un additif hydrophile insoluble dans l'eau, choisi dans le groupe comprenant acide polyacrylique en partie reticulaire, en partie acide polyacrylique reticulaire soit en partie soit totalement salifiés avec des cations métalliques, alcool polyvinylique réticulaire, cellulose, et/ou leur mélanges, incorporés d'un façon homogène dans ledit polymère polyuréthane microcoagulé.

2. Composition à base de polyuréthane selon la révendication 1, caractérisée en ce que ledit polymère polyuréthane est un polymère polyuréthane linéare soluble dans les solvants du type connu.

3. Composition à base de polyuréthane selon la révendication 1 caractérisée en ce qu'elle comprend d'autres additifs connus, tels que charges et/ou pigments et/ou stabilisateurs et/ou antioxydants.

4. Composition à base de polyuréthane selon la révendication 1, caractérisée en ce que lesdits cations métalliques qui salifient soit en partie soit totalement l'acide polyacrylique reticulaire sont constitués d'aluminium.

5. Procédé pour la préparation d'une composition à base de polyuréthane susceptible d'être utilisée comme constituant de base de matériaux pouvant remplacer la peau et le cuir d'origine naturelle selon la révendication 1, caracterisée en ce qu'il comprend les phases suivantes:
a - préparation d'une solution d'un polymère polyuréthane non réticulaire dans un solvant approprié du type connu tel que, par exemple, la dimethylformamide;
b - mélange de ladite solution de polyuréthane avec ledit additif hydrophile tel qu'une dispersion colloidale
c - enduction et/ou impregnation avec ledit mélange ainsi obtenu d'un support approprié tel que un tissu, un feutre, un tissu non tissé et/ou leur combinaisons
d - microcoagulation de la composition ainsi obtenue au moyen de l'enlèvement dudit solvant avec de l'eau suivant les techniques et les modalités de l'art connu.

6. Procédé selon la révendication 5, caractérisé en ce que des charges et/ou des pigments et/ou des stabilisateurs et/ou des antioxydants du type connu sont incorporés dans ladite composition à base de polyuréthane en les introduisant dans le mélange constitué par ladite solution de polyuréthane avec ledit additif tel qu'une dispersion colloidale, et/ou dans ladite solution de ladite polyuréthane dans un solvant approprié et/ou dans ladite dispersion dudit additif hydrophile.

7. Materiau synthetique pouvant remplacer la peau, le cuir d'origine naturelle constitué par une composition polymère à base de polyuréthane selon la revendication 1 supportée sur un support flexible tel qu'un tissu, un feutre un tissu non tissé et leur combinaisons.
